(19) **Europäisches Patentamt European Patent Office Office européen des brevets**

(11) **EP 4 139 845 B1**

(12) **EUROPEAN PATENT SPECIFICATION**

(45) Date of publication and mention of the grant of the patent:
**12.02.2025 Bulletin 2025/07**

(21) Application number: **20720805.9**

(22) Date of filing: **20.04.2020**

(51) International Patent Classification (IPC):
*G06N 3/006* (2023.01)          *G06N 3/045* (2023.01)
*G06N 3/092* (2023.01)

(52) Cooperative Patent Classification (CPC):
**G06N 3/006; G06N 3/045; G06N 3/092;**
G06N 3/048; G06N 7/01

(86) International application number:
**PCT/EP2020/061007**

(87) International publication number:
**WO 2021/213617 (28.10.2021 Gazette 2021/43)**

(54) **UNCERTAINTY-DIRECTED TRAINING OF A REINFORCEMENT LEARNING AGENT FOR TACTICAL DECISION-MAKING**

UNSICHERHEITSGESTEUERTES TRAINING EINES VERSTÄRKUNGSLERNAGENTEN ZUR TAKTISCHEN ENTSCHEIDUNGSFINDUNG

ENTRAÎNEMENT DIRIGÉ PAR L'INCERTITUDE D'UN AGENT D'APPRENTISSAGE PAR RENFORCEMENT POUR LA PRISE DE DÉCISION TACTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2023 Bulletin 2023/09**

(73) Proprietor: **Volvo Autonomous Solutions AB 405 08 Göteborg (SE)**

(72) Inventors:
• **HOEL, Carl-Johan 413 23 Göteborg (SE)**
• **LAINE, Leo 438 94 HÄRRYDA (SE)**

(74) Representative: **Kransell & Wennborg KB P.O. Box 2096 403 12 Göteborg (SE)**

(56) References cited:
**US-A1- 2020 094 824**

• **LOTJENS BJORN ET AL: "Safe Reinforcement Learning With Model Uncertainty Estimates", 2019 INTERNATIONAL CONFERENCE ON ROBOTICS AND AUTOMATION (ICRA), IEEE, 20 May 2019 (2019-05-20), pages 8662 - 8668, XP033593579, DOI: 10.1109/ICRA.2019.8793611**

Description

## TECHNICAL FIELD

The present disclosure relates to the field of autonomous vehicles and in particular to a method of providing a reinforcement learning agent for decision-making to be used in controlling an autonomous vehicle.

## BACKGROUND

The decision-making task of an autonomous vehicle is commonly divided into strategic, tactical, and operational decision-making, also called navigation, guidance and stabilization. In short, tactical decisions refer to high-level, often discrete, decisions, such as when to change lanes on a highway, or whether to stop or go at an intersection. This invention primarily targets the tactical decision-making field.

Tactical decision-making is challenging due to the diverse set of environments the vehicle needs to handle, the interaction with other road users, and the uncertainty associated with sensor information. To manually predict all situations that can occur and code a suitable behavior is infeasible. Therefore, it is an attractive option to consider methods that are based on machine learning to train a decision-making agent.

Conventional decision-making methods are based on predefined rules and implemented as hand-crafted state machines. Other classical methods treat the decision-making task as a motion planning problem. Although these methods are successful in many cases, one drawback is that they are designed for specific driving situations, which makes it hard to scale them to the complexity of real-world driving.

Reinforcement learning (RL) has previously been applied to decision-making for autonomous driving in simulated environments. See for example C. J. Hoel, K. Wolff and L. Laine, "Automated speed and lane change decision making using deep reinforcement learning", Proceedings of the 21st International Conference on Intelligent Transportation Systems (ITSC), 4-7 Nov. 2018, pp. 2148-2155 [doi:10.1109/ITSC.2018.8569568]. However, the agents that were trained by RL in previous works can only be expected to output rational decisions in situations that are close to the training distribution. Indeed, a fundamental problem with these methods is that no matter what situation the agents are facing, they will always output a decision, with no suggestion or indication about the uncertainty of the decision or whether the agent has experienced anything similar during its training. If, for example, an agent that was trained for one-way highway driving was deployed in a scenario with oncoming traffic, it would still output decisions, without any warning that these are presumably of a much lower quality. A more subtle case of insufficient training is one where the agent that has been exposed to a nominal or normal highway driving environment is suddenly facing a speeding driver or an accident that creates standstill traffic.

A precaution that has been taken in view of such shortcomings is comprehensive real-world testing in confined environments and/or with a safety driver on board, combined with successive refinements. Testing and refinement are iterated until the decision-making agent is seen to make an acceptably low level of observed errors and thus fit for use outside the testing environment. This is onerous, time-consuming and drains resources from other aspects of research and development.

US20200094824A1 discloses a method for danger prediction, in which a machine-learning (ML) model is trained based on human-annotated simulated training data, after which the model is used to predict a dangerous situation relative to a motor vehicle by applying the trained ML model to unlabeled data for the motor vehicle. It is evaluated how well the ML model has learnt the discriminative function, i.e., how accurately it mimics the annotated training data, and the training can be repeated if the evaluation suggests that the ML model is not accurate enough.

"Safe Reinforcement Learning With Model Uncertainty Estimates", 2019-05-20, (Lütjens *et al.*) applies Monte-Carlo dropout and bootstrapping to give computationally tractable and parallelizable uncertainty estimates relating to decision-making for control of autonomous vehicles on the basis of deep neural networks (DNNs). The methods are embedded in a Safe Reinforcement Learning framework to form uncertainty-aware navigation around pedestrians. The result is claimed to be collision-avoidance policy that is insightful about what it does not know and cautiously avoids pedestrians that exhibit unseen behavior. On a technical level, the authors establish a set of LSTM networks to predict the collision probabilities of motion primitives; the decision-making is based on a model predictive controller (MPC) which selects the safest motion primitive with the smallest joint cost.

## SUMMARY

One objective of the present invention is to make available methods and devices for assessing the need for additional training of a decision-making agent, such as an RL agent. A particular objective would be to provide methods and devices determining the situations which the additional training of decision-making agent should focups on. Such methods and devices may preferably include a safety criterion that determines whether the trained decision-making agent is confident enough about a given state-action pair (corresponding to a possible decision) or about a given state, so that - in the negative case - the agent can be given additional training aimed at this situation.

These and other objectives are achieved by the invention according to the independent claims. The dependent claims define example embodiments of the invention.

In a first aspect of the invention, there is provided a method of providing an RL agent for decision-making to be used in controlling an autonomous vehicle. The method, which may be performed by processing circuitry arranged in the autonomous vehicle or separate therefrom, comprises a $K \geq 2$ training sessions, in which the RL agent interacts with a first environment $E1$ including the autonomous vehicle, wherein each training session has a different initial value and yields a state-action value function $Q_k(s, a)$ ($k = 1, 2, ..., K$) dependent on state $s$ and action $a$. The $K$ training sessions can be performed sequentially with respect to time, or in parallel with each other. Next follows an uncertainty evaluation on the basis of a variability measure $c_v(\cdot, \cdot)$ for the plurality of state-action value functions evaluated for one or more state-action pairs $(\hat{s}_l, \hat{a}_l)$ ($l = 1, 2, ..., L$, where $L \geq 1$) corresponding to possible decisions by the trained RL agent. The method further comprises initiating additional training, either by actually performing this training or by providing instructions as to how the RL agent is to be trained. In the additional training, the RL agent interacts with a second environment $E2$ including the autonomous vehicle, wherein the second environment differs from the first environment by an increased exposure to a subset of state-action pairs for which the variability measure indicates a relatively higher uncertainty, which may be written $B = \{(\check{s}_l, \hat{a}_l): c_v(\check{s}_l, \hat{a}_l) > C_v\}$, where $C_v$ is a threshold variability which may be predefined or dynamically chosen in any of the ways described below. Introducing the index set $L_B \subset \{1, 2, ..., L\}$, the subset may equivalently be expressed as $B = \{(\check{s}_l, \hat{a}_l): l \in L_B\}$.

Accordingly, the uncertainty of an $l^{th}$ possible decision to take action $\hat{a}_l$ in state $\hat{s}_l$ is assessed on the basis of a measure of the statistic variability of $K$ observations being the $K$ state-action value functions evaluated for this state-action pair: $Q_1(\hat{s}_l, \hat{a}_l), Q_2(\hat{s}_l, \hat{a}_l), ..., Q_K(\hat{s}_l, \hat{a}_l)$. The uncertainty is assessed on the basis of the variability measure, that is, either by considering its value without processing or by considering a quantity derived from the variability measure, e.g., after normalization, scaling, combination with other relevant factors etc. The inventors have realized that additional training of the RL agent is particularly efficient if focused on the subset of such possible state-action pairs for which the uncertainty is relatively higher. This is achieved by increasing, in the second environment $E2$, the exposure to this subset compared to the first environment $E1$; in particular, the second environment's incidence of states or situations which the state-action pairs in this subset involve may be higher. This makes it possible to provide an RL agent with a desired safety level in shorter time.

It is understood that the exposure to the subset of state-action pairs in the first environment $E1$ may have been zero, that is, such state-action pairs were altogether missing. Furthermore, the second environment $E2$ may expose the autonomous vehicle to the subset of state-action pairs only.

As used herein, an "RL agent" may be understood as software instructions implementing a mapping from a state $s$ to an action $a$. The term "environment" refers to a simulated or real-world environment, in which the autonomous vehicle - or its model/avatar in the case of a simulated environment - operates. A mathematical model of the RL agent's interaction with an "environment" in this sense is given below. A "variability measure" includes any suitable measure for quantifying statistic dispersion, such as a variance, a range of variation, a deviation, a variation coefficient, an entropy etc. Generally, all terms used in the claims are to be construed according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

In one embodiment, the uncertainty evaluation is guided by a preceding traffic sampling in which state-action pairs encountered by the autonomous vehicle are recorded on the basis of at least one physical sensor signal. The physical sensor signal may be provided by a physical sensor in the vehicle so as to detect current conditions of the driving environment or internal states prevailing in the vehicle. The autonomous vehicle may be operating in real-world traffic. The uncertainty evaluation may then relate to the state-action pairs recorded during the traffic sampling. An advantage with this embodiment is that the traffic sampling may help reveal situations that have been overlooked, or not given sufficient weight, in the first environment E1. This may broaden the distribution of situations that the RL agent can handle.

In embodiments where no traffic sampling is performed, the method may instead traverse the complete set of possible state-action pairs and evaluate the uncertainty for each of these by calculating the variability measure. This may be combined by manual or experience-based elimination of state-action pairs that are unlikely to occur in the intended use case and therefore need not be evaluated.

In one embodiment, the first or the second environment, or both, are simulated environments. If the second environment $E2$ is a simulated environment, it may be generated from the subset $B$ of state-action pairs for which the variability measure indicates a relatively higher uncertainty. The second environment $E2$ may be generated from the subset $B$ by manually setting up a scenario that will involve these state-action pairs, by using them as initial conditions or situations that will deterministically occur as the system evolves (e.g., an avoidable collision). It may be convenient to first determine which states occur - or which states occur most frequently - in the subset $B$ of state-action pairs. With the notation introduced above, the states to be considered can be written $\tilde{S}_B = \{s: s = \hat{s}_l \text{ for some } l \in L_B\}$. These states are then used to generate the second environment $E2$. Furthermore, the second environment $E2$ may be generated from the state-action pairs in subset $B$ by adding the subset $B$ to the first environment $E1$.

As stated above, the subset of state-action pairs on which the additional training is to be focused can be expressed in terms of a threshold variability $C_v$, which gives $B = \{(\check{s}_l, \hat{a}_l): c_v(\check{s}_l, \hat{a}_l) > C_v\}$. In one embodiment, the threshold variability $C_v$ is predefined and may correspond to the maximum uncertainty that is acceptable to allow the RL agent to perform a specific decision-making task. For example, if coefficient of variation is the variability measure, then one may set $C_v = 0.02$. This constitutes an absolute selection criterion. Alternatively, and in particular in the early stages of training an RL agent, the threshold variability may be set dynamically in response to the distribution of the variability for the plurality of state-action pairs evaluated. As an example, one may set $C_v$ corresponding to the $n^{th}$ percentile of the values of the variability measure, which will cause the worst (in the sense of most uncertain) $100 - n$ percent of the state-action value pairs to have increased exposure in the second environment $E2$. This may be described as a relative selection criterion which takes into account the statistics of the variability measure values.

In various embodiments, the RL agent may be implemented by at least one neural network. In particular, $K$ neural networks may be utilized to perform the $K$ training sessions. Each of the $K$ neural networks may be initialized with an independently sampled set of weights.

The invention is not dependent on the specific type of RL agent but can be embodied using a policy-based or value-based RL agent. Specifically, the RL agent may include a policy network and a value network. The RL agent may be obtained by a policy-gradient algorithm, such as an actor-critic algorithm. As another example, the RL agent is a Q-learning agent, such as a deep Q network (DQN).

In a second aspect of the invention, there is provided an arrangement for controlling an autonomous vehicle. The arrangement, which may correspond to functional or physical components of a computer or distributed computing system, includes processing circuitry and memory which implement an RL agent configured to interact with a first environment including the autonomous vehicle in a plurality of training sessions, each training session having a different initial value and yielding a state-action value function $Q_k(s, a)$ dependent on state and action. The processing circuitry and memory furthermore implement a training manager which is configured to

- estimate an uncertainty on the basis of a variability measure for the plurality of state-action value functions evaluated for one or more state-action pairs corresponding to possible decisions by the trained RL agent, and

- initiate additional training, in which the RL agent interacts with a second environment including the autonomous vehicle, wherein the second environment differs from the first environment by an increased exposure to a subset of state-action pairs for which the variability measure indicates a relatively higher uncertainty.

It is emphasized that the arrangement may be located in the autonomous vehicle or separate from it. Further, the inventors envision distributed embodiments where the RL agent and the training manager, which may be in use during initial training stages but is not necessary while the autonomous vehicle operates in traffic, are implemented by respective, physically separate circuitry sections.

In some embodiments, the arrangement may further comprise a vehicle control interface configured to record state-action pairs encountered by the autonomous vehicle on the basis of at least one physical sensor in the autonomous vehicle. The training manager will estimate the uncertainty at least for these recorded state-action pairs.

In a third aspect, the invention provides a computer program for executing the vehicle control method on an arrangement with these characteristics. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storages of the magnetic, optical or solid-state type. Still within the scope of "data carrier", such memories may be fixedly mounted or portable.

The arrangement according to the second aspect of the invention and the computer program according to the third aspect have same or similar effects and advantages as the method according to the first aspect. The embodiments and further developments described above in method terms are equally applicable to the second and third aspects.

**BRIEF DESCRIPTION OF THE DRAWINGS**

Embodiments of the invention are described, by way of example, with reference to the accompanying drawings, on which:

figure 1 is a flowchart of a method according to an embodiment of the invention;

figure 2 is a block diagram of an arrangement for controlling an autonomous vehicle according to another embodiment of the invention;

figure 3 shows an architecture of a neural network of an RL agent; and

figure 4 is a plot of the mean uncertainty of a chosen action over 5 million training steps in an example.

## DETAILED DESCRIPTION

The aspects of the present invention will now be described more fully with reference to the accompanying drawings, on which certain embodiments of the invention are shown. These aspects may, however, be embodied in many different forms and the described embodiments should not be construed as limiting; rather, they are provided by way of example so that this disclosure will be thorough and complete, and to fully convey the scope of all aspects of invention to those skilled in the art.

Reinforcement learning is a subfield of machine learning, where an agent interacts with some environment to learn a policy $\pi(s)$ that maximizes the future expected return. Reference is made to the textbook R. S. Sutton and A. G. Barto, Reinforcement Learning: An Introduction, 2nd ed., MIT Press (2018).

The policy $\pi(s)$ defines which action a to take in each state s. When an action is taken, the environment transitions to a new state $s'$ and the agent receives a reward r. The reinforcement learning problem can be modeled as a Markov Decision Process (MDP), which is defined by the tuple ($\mathcal{S}$; $\mathcal{A}$; $T$; $R$; $\gamma$), where $\mathcal{S}$ is the state space, $\mathcal{A}$ is the action space, $T$ is a state transition model (or evolution operator), $R$ is a reward model, and $\gamma$ is a discount factor. This model can also be considered to represent the RL agent's interaction with the training environment. At every time step t, the goal of the agent is to choose an action a that maximizes the discounted return,

$$R_t = \sum_{k=0} \gamma^k r_{t+k}.$$

In Q-learning, the agent tries to learn the optimal action-value function $Q^*(s, a)$, which is defined as

$$Q^*(s,a) = \max_{\pi} \mathbb{E}[R_t | s_t = s, a_t = a, \pi].$$

From the optimal action-value function, the policy is derived as per

$$\pi(s) = \text{argmax}\, Q^*(s,a).$$

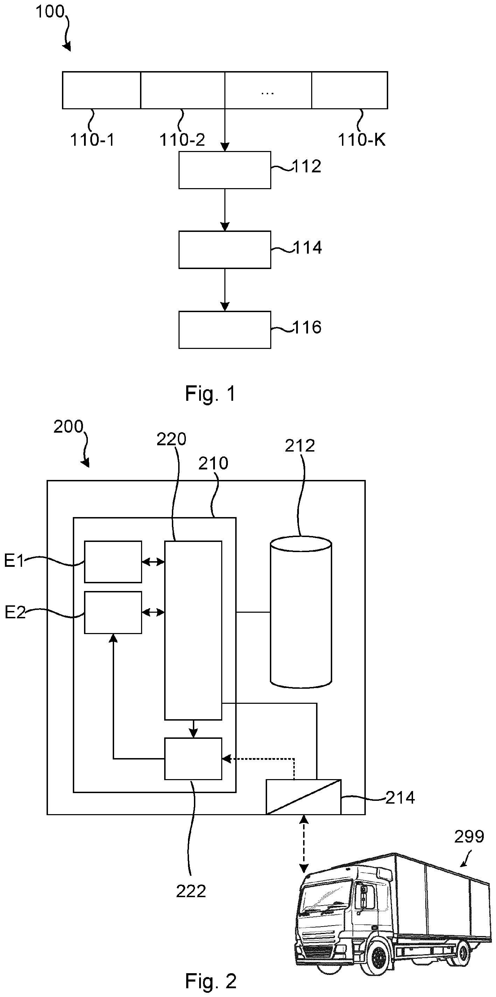

An embodiment of the invention is illustrated by figure 1, which is a flowchart of a method 100 for providing an RL agent for decision-making to be used in controlling an autonomous vehicle. In the embodiment illustrated, the method begins with a plurality of training sessions 110-1, 110-2, ..., 110-K $(K \geq 2)$, which may be carried out in a simultaneous or at least time-overlapping fashion. In each training session, the RL agent interacts with a first environment $E1$ which has its own initial value and includes the autonomous vehicle (or, if the environment is simulated, a model of the vehicle). The $k^{th}$ training session returns a state-action value function $Q_k(s, a)$, for any $1 \leq k \leq K$, from which a decision-making policy may be derived in the manner described above. All $K$ state-action value functions are combined into a combined state-action value function $\overline{Q}(s, a)$, which may represent a central tendency of the state-action value functions, such as a mean value, of the $K$ state-action values:

$$\overline{Q}(s,a) = \frac{1}{K}\sum_{k=1}^{K} Q_k(s,a).$$

The inventors have realized that the uncertainty of a possible decision corresponding to the state-action pair $(\hat{s}, \hat{a})$ is estimated on the basis of a variability of the numbers $Q_1(\hat{s}, \hat{a})$, $Q_2(\hat{s}, \hat{a})$, ..., $Q_K(\hat{s}, \hat{a})$. The variability may be measured as the standard deviation, coefficient of variation (i.e., standard deviation normalized by mean), variance, range, mean absolute difference or the like. The variability measure is denoted $c_v(\check{s}, \check{a})$ in this disclosure, whichever definition is used.

Conceptually, a goal of the method 100 is to determine a training set $\mathcal{S}_B$ of those states for which the RL agent will benefit most from additional training:

$$\mathcal{S}_B = \{s \in \mathcal{S} : c_v(s, a) > C_v \text{ for some } a \in \mathcal{A}|_s\},$$

where $C_v$ is the threshold variability and $\mathcal{A}|_s$ is the set of possible actions in state s. If the threshold $C_v$ is predefined, its value may represent a desired safety level at which the autonomous vehicle is to be operated. It may have been determined or calibrated by traffic testing and may be based on the frequency of decisions deemed erroneous, collisions, near-collisions, road departures and the like. A possible alternative is to set the threshold dynamically, e.g., in such manner that a predefined percentage of the state-action pairs are to have increased exposure during the additional training.

To determine the need for additional training, the disclosed method 100 includes an uncertainty evaluation 114 of at least some of the RL agent's possible decisions, which can be represented as state-action pairs. One option is to perform a full uncertainty evaluation including also state-action pairs with a relatively low incidence in real traffic. Another option is to perform a partial uncertainty evaluation. To this end, prior to the uncertainty evaluation 114, an optional traffic sampling 112 may be performed, during which the state-action pairs that are encountered in the traffic are recorded. In the notation used above, the collection of recorded state-action pairs may be written $\{(\hat{s}_l, \hat{a}_l) \in \mathcal{S} \times \mathcal{A} : 1 \leq l \leq L\}$, where $l$ is an arbitrary index. In the uncertainty evaluation 114, the variability measure $c_v$ is computed for each recorded state-action pair, that is, for each $l \in [1, L]$. The training set $\mathcal{S}_B$ can be approximated

$$\tilde{\mathcal{S}}_B = \{s \in \mathcal{S} : s = \hat{s}_l \text{ and } c_v(\hat{s}_l, \hat{a}_l) > C_v \text{ for some } l \in [1, L]\}.$$

Recalling that $L_B$, as defined above, is the set of all indices for which the threshold variability $C_v$ is exceeded, the approximate training set is equal to

$$\tilde{\mathcal{S}}_B = \{s \in \mathcal{S} : s = \hat{s}_l \text{ for some } l \in L_B\}.$$

The method 100 then concludes with an additional training stage 116, in which the RL agent is caused to interact with a second environment $E2$ differing from the first environment $E1$ by an increased exposure to the training set $\mathcal{S}_B$, or by an increased exposure to the approximate training set $\tilde{\mathcal{S}}_B$, or by another property promoting the exposure to the state-action pairs $(\hat{s}_l, \hat{a}_l)$ that have indices in $L_B$. In some embodiments, it is an RL agent corresponding to combined state-action value function $\overline{Q}(s, a)$ that is caused to interact with the second environment $E2$. In other embodiments, the $K$ state-action value function $Q_k(s, a)$, which may be regarded as an equal number of sub-agents, are caused to interact with the second environment $E2$. Whichever option is chosen, the method 100 is suitable for providing an RL agent adapted to make decisions underlying the control of an autonomous vehicle.

To illustrate the uncertainty evaluation stage 114, an example output when $L = 15$ and the variability measure is the coefficient of variations may be represented as in Table 1.

| Table 1: Example uncertainty evaluation | | |
|---|---|---|
| $l$ | $(\hat{s}_l, \hat{a}_l)$ | $c_v(\hat{s}_l, \hat{a}_l)$ |
| 1 | (S1, right) | 0.011 |
| 2 | (S1, remain) | 0.015 |
| 3 | (S1, left) | 0.440 |
| 4 | (S2, yes) | 0.005 |
| 5 | (S2, no) | 0.006 |
| 6 | (S3, A71) | 0.101 |
| 7 | (S3, A72) | 0.017 |
| 8 | (S3, A73) | 0.026 |
| 9 | (S3, A74) | 0.034 |
| 10 | (S3, A75) | 0.015 |
| 11 | (S3, A76) | 0.125 |

(continued)

| Table 1: Example uncertainty evaluation | | |
|---|---|---|
| $l$ | $(\hat{s}_l, \hat{a}_l)$ | $c_v(\hat{s}_l, \hat{a}_l)$ |
| 12 | (S3, A77) | 0.033 |
| 13 | (S4, right) | 0.017 |
| 14 | (S4, remain) | 0.002 |
| 15 | (S4, left) | 0.009 |

Here, the sets of possible actions for each state S1, S2, S3, S4 are not known. If it is assumed that the enumeration of state-action pairs for each state is exhaustive, then $\mathcal{A}|_{S1}$ = $\mathcal{A}|_{S4}$ = {right, remain, left}, $\mathcal{A}|_{S2}$ = {yes, no} and $\mathcal{A}|_{S3}$ = {A71, A72, A73, A74, A75, A76, A77}. If the enumeration is not exhaustive, then {right, remain, left} $\subset$ $\mathcal{A}|_{S1}$, {yes, no} $\subset$ $\mathcal{A}|_{S2}$ and so forth. For an example value of the threshold $C_v$ = 0.020, one obtains $L_B$ = {3,6,8,9,11,12}. The training set consists of all states for which at least one action belongs to a state-action pair with a variability measure exceeding the threshold, namely, $\tilde{\mathcal{S}}_B$ = {S1, S3}, which will be the emphasis of the additional training 116.

The training set $\mathcal{S}_B$ can be defined in alternative ways. For example, the training set may be taken to include all states s $\in$ $\mathcal{S}$ for which the mean variability of the possible actions $\mathcal{A}|_s$ exceeds the threshold $C_v$. This may be a proper choice if it is deemed acceptable for the RL agent to have minor points of uncertainty but that the bulk of its decisions are relatively reliable.

Figure 2 illustrates an arrangement 200 for controlling an autonomous vehicle 299 according to another embodiment of the invention. The autonomous vehicle 299 may be any road vehicle or vehicle combination, including trucks, buses, construction equipment, mining equipment and other heavy equipment operating in public or non-public traffic. The arrangement 200 may be provided, at last partially, in the autonomous vehicle 299. The arrangement 200, or portions thereof, may alternatively be provided as part of a stationary or mobile controller (not shown), which communicates with the vehicle 299 wirelessly.

The arrangement 200 includes processing circuitry 210, a memory 212 and a vehicle control interface 214. The vehicle control interface 214 is configured to control the autonomous vehicle 299 by transmitting wired or wireless signals, directly or via intermediary components, to actuators (not shown) in the vehicle. In a similar fashion, the vehicle control interface 214 may receive signals from physical sensors (not shown) in the vehicle so as to detect current conditions of the driving environment or internal states prevailing in the vehicle 299. The processing circuitry 210 implements an RL agent 220 and a training manager 222 to be described next.

The RL agent 220 interacts with a first environment $E$1 including the autonomous vehicle 299 in a plurality of training sessions, each training session having a different initial value and yielding a state-action value function dependent on state and action. The RL agent 220 may, at least during the training phase, comprise as many sub-agents as there are training sessions, each sub-agent corresponding to a state-action value function $Q_k(s, a)$. The sub-agents may form a combined into a joint RL agent, corresponding to the combined state-action value function $\overline{Q}(s, a)$ introduced above, for the purpose of the decision-making. The RL agent 220 according to any of these definitions can be brought to interact with a second environment E2 in which the autonomous vehicle 299 is exposed more intensely to the training set $\mathcal{S}_B$ or its approximation $\tilde{\mathcal{S}}_B$, as discussed previously.

The training manager 222 is configured to estimate an uncertainty on the basis of a variability measure for the plurality of state-action value functions evaluated for a state-action pair corresponding to each of the possible decisions by the RL agent. In some embodiments, the training manager 222 does not perform a complete uncertainty estimation. For example, as suggested by the broken-line arrow, the training manager 222 may receive physical sensor data via the vehicle control interface 214 and determine on this basis a collection of state-action pairs to evaluate, {$(\hat{s}_l, \hat{a}_l) \in \mathcal{S} \times \mathcal{A}$ : 1 $\leq l \leq L$}. The training manager 222 is configured to estimate an uncertainty on the basis of the variability measure $c_v$ for the $K$ state-action value functions $Q_k(s, a)$ evaluated for these state-action pairs. The state-action pairs found to be associated with a relatively higher value of the variability measure are to be focused on in additional training, which the training manager 222 will initiate.

The thus additionally trained RL agent may be used to control the autonomous vehicle 299, namely by executing decision by the RL agent via the vehicle control interface 214.

Returning to the description of the invention from a mathematical viewpoint, an embodiment relies on the DQN algorithm. This algorithm uses a neural network with weights $\theta$ to approximate the optimal action-value function as $Q^*(s, a)$ $\approx Q(s, a; \theta)$; see further V. Mnih et al., "Human-level control through deep reinforcement learning", Nature, vol. 518, pp. 529-533 (2015) [doi:10.1038/nature14236.]. Since the action-value function follows the Bellman equation, the weights can be optimized by minimizing the loss function

$$L(\theta) = \mathbb{E}\left[\left(r + \gamma \max_a Q(s', a' : \theta^-) - Q(s, a; \theta)\right)^2\right]$$

As explained in Mnih, the loss is calculated for a minibatch $M$ and the weights $\theta^-$ of a target network are updated repeatedly.

The DQN algorithm returns a maximum likelihood estimate of the $Q$ values but gives no information about the uncertainty of the estimation. The risk of an action could be represented as the variance of the return when taking that action. One line of RL research focuses on obtaining an estimate of the uncertainty by statistical bootstrap; an ensemble of models is then trained on different subsets of the available data and the distribution that is given by the ensemble is used to approximate the uncertainty. A sometimes better-performing Bayesian posterior is obtained if a randomized prior function (RPF) is added to each ensemble member; see for example I. Osband, J. Aslanides and A. Cassirer, "Randomized prior functions for deep reinforcement learning," in: S. Bengjo et al. (eds.), Adv. in Neural Inf. Process. Syst. 31 (2018), pp. 8617-8629. When RPF is used, each individual ensemble member, here indexed by $k$, estimates the Q values as the sum

$$Q_k(s, a) = f(s, a; \theta_k) + \beta p(s, a; \hat{\theta}_k),$$

where $f, p$ are neural networks, with parameters $\theta_k$ that can be trained and further parameters $\hat{\theta}_k$ that are kept fixed. The factor $\beta$ can be used to tune the importance of the prior function. When adding the prior, the loss function $L(\theta)$ defined above changes into

$$L(\theta_k) = \mathbb{E}_M\left[\left(r + \gamma \max_{a'}(f_{\theta_k^-} + \beta p_{\hat{\theta}_k})(s', a') - (f_{\theta_k^-} + \beta p_{\hat{\theta}_k})(s, a)\right)^2\right].$$

The full ensemble RPF method, which was used in this implementation, may be represented in pseudo-code as Algorithm 1:

---
**Algorithm 1** Ensemble RPF training process

---
1: **for** $k \leftarrow 1$ to $K$
2:       Initialize $\theta_k$ and $\hat{\theta}_k$ randomly
3:       $m_k \leftarrow \{\}$
4: $i \leftarrow 0$
5: **while** networks not converged
6:       $s_i \leftarrow$ initial random state
7:       $k \sim \mathcal{U}\{1, K\}$
8:       **while** episode not finished
9:             $a_i \leftarrow \arg\max_a Q_k(s_i, a)$
10:            $s_{i+1}, r_i \leftarrow \text{STEPENVIRONMENT}(s_i, a_i)$
11:            **for** $k \leftarrow 1$ to $K$
12:                **if** $p \sim \mathcal{U}(0, 1) < p_{\text{add}}$
13:                   $m_k \leftarrow m_k \cup \{(s_i, a_i, r_i, s_{i+1})\}$
14:                $M \leftarrow$ sample from $m_k$
15:                update $\theta_k$ with SGD and loss $L(\theta_k)$
16:            $i \leftarrow i + 1$

---

In the pseudo-code, the function StepEnvironment corresponds to a combination of the reward model $R$ and state transition model T discussed above. The notation $k \sim \mathcal{U}\{1, K\}$ refers to sampling of an integer $k$ from a uniform distribution over the integer range [1, *K*], and $p \sim \mathcal{U}(0,1)$ denotes sampling of a real number from a uniform distribution over the open interval (0,1).

Here, an ensemble of *K* trainable neural networks and *K* fixed prior networks are first initialized randomly. A replay memory is divided into *K* parallel buffers $m_k$, for the individual ensemble members (although in practice, this can be implemented in a memory-efficient way that uses a negligible amount of more memory than a single replay memory). To handle exploration, a random ensemble member is chosen for each training episode. Actions are then taken by greedily maximizing the *Q* value of the chosen ensemble member, which corresponds to a form of approximate Thompson sampling. The new experience $(s_i, a_i, r_i, s_{i+1})$ is then added to each ensemble buffer with probability $p_{add}$. Finally, a minibatch *M* of experiences is sampled from each ensemble buffer and the trainable network parameters of the corresponding ensemble member are updated by stochastic gradient descent (SGD), using the second definition of the loss function given above.

The presented ensemble RPF algorithm was trained in a one-way, three-lane highway driving scenario using the Simulation of Urban Mobility (SUMO) traffic simulator. The vehicle to be controlled (ego vehicle) was a 16 m long truck-trailer combination with a maximum speed of 25 m/s. In the beginning of each episode, 25 passenger cars were inserted into the simulation, with a random desired speed in the range 15 to 35 m/s. In order to create interesting traffic situations, slower vehicles were positioned in front of the ego vehicle, and faster vehicles were placed behind the ego vehicle. Each episode was terminated after N = 100 timesteps, or earlier if a collision occurred or the ego vehicle drove off the road. The simulation time step was set to $\Delta t$ = 1 s. The passenger vehicles were controlled by the standard SUMO driver model, which consists of an adaptive cruise controller for the longitudinal motion and a lane-change model that makes tactical decisions to overtake slower vehicles. In the scenarios considered here, no strategical decisions were necessary, so the strategical part of the lane-changing model was turned off. Furthermore, in order to make the traffic situations more demanding, the cooperation level of the lane changing model was set to zero. Overtaking was allowed both on the left and right side of another vehicle, and each lane change took 4 s to complete. This environment was modeled by defining a corresponding state space $\mathcal{S}$, action space $\mathcal{A}$, state transition model *T,* and reward *R*.

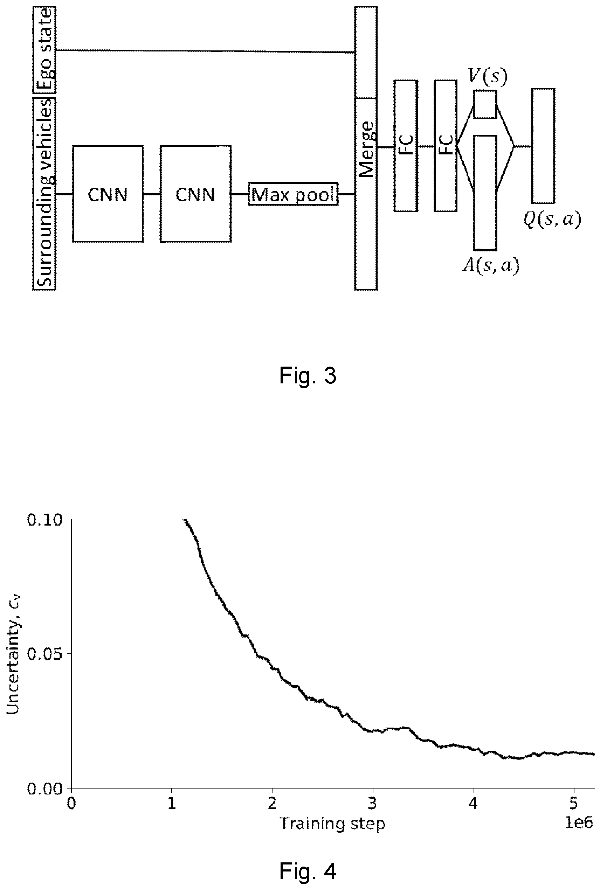

Figure 3 illustrates the architecture of the neural network is used in this embodiment. The architecture includes a temporal convolutional neural network (CNN) architecture, which makes the training faster and, at least in some use cases, gives better results than a standard fully connected (FC) architecture. By applying CNN layers and a max pooling layer to the part of the input that describes the surrounding vehicles, the output of the network becomes independent of the ordering of the surrounding vehicles in the input vector, and the architecture allows a varying input vector size. Rectified linear units (ReLUs) are used as activation functions for all layers, except the last, which has a linear activation function. The architecture also includes a dueling structure that separates the state value *V*(*s*) and action advantage *A*(*s, a*) estimation.

In an example, the RL agent was trained in the simulated environment described above. After every 50000 added training samples, henceforth called training steps, the agent was evaluated on 100 different test episodes. These test episodes were randomly generated in the same way as the training episodes, but not present during the training. The test episodes were also kept identical for all the test phases.

To gain insight into how the uncertainty estimation evolves during the training process, and to illustrate how to set the uncertainty threshold parameter $C_v$, figure 4 shows the coefficient of variation $c_v$ for the chosen action during the test episodes as a function of the number of training steps (scale in millions of steps). Each plotted value is an average over the 100 test episodes of that test phase. Figure 4 shows the uncertainty of the chosen action, whereas the uncertainty for not-chosen actions may be higher. After around four million training steps, the coefficient of variation settles at around 0.01, with a small spread in values, which may justify setting the threshold at or around $C_v$ = 0.02.

To assess the ability of the RPF ensemble agent to cope with unseen situations, the agent obtained after five million training steps was deployed in scenarios that had not been included in the training episodes. In various situations that involved an oncoming vehicle, the uncertainty estimate was consistently high, $C_v \approx 0.2$. The fact that this value is one level of magnitude above the proposed value of the threshold $C_v$ = 0.02, along with several further examples, suggests that the criterion $c_v(s, a) > C_v$ for including this state-action value pair (or the state that it involves) in the additional training is a robust and reliable guideline.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. In particular, the disclosed approach to estimating the uncertainty of a possible decision by an RL agent is applicable in machine learning more generally, also outside of the field of autonomous vehicles. It may be advantageous wherever the reliability of a possible decision is expected to influence personal safety, material values, information quality, user experience and the like, and where the problem of precisely focusing additional training arises.

**Claims**

1. A computer-implemented method (100) of controlling actuators in an autonomous vehicle, the method comprising:

   a plurality of training sessions (110-1, ..., 110-K), in which a reinforcement learning, RL, agent interacts with a simulated or real-world first environment including the autonomous vehicle, such that in each training session the environment has a different initial value and each training session yields a state-action value function $Q_k(s, a)$ dependent on state and action, wherein a state describes vehicles surrounding the autonomous vehicle;
   an uncertainty evaluation (114) including computing a variability measure for values of the plurality of state-action value functions evaluated for one or more state-action pairs corresponding to possible tactical driving decisions by the trained RL agent, wherein:

   - each said tactical driving decision, such as a lane change or whether to stop or go at an intersection, relates to control of the autonomous vehicle in the real world;
   - each said tactical driving decision is based on a common state-action value function $\overline{Q}(s, a)$ obtained by combining the plurality of state-action value functions $Q_k(s, a)$ from the training sessions; and
   - the variability measure is one or more of the following: a variance, a range, a deviation, a variation coefficient, an entropy;

   additional training (116), in which the RL agent interacts with a simulated or real-world second environment including the autonomous vehicle , wherein the second environment differs from the first environment by an increased exposure to a subset of state-action pairs for which the variability measure indicates a variability measure exceeding a threshold $C_v$; and
   vehicle control, in which the autonomous vehicle is controlled in the real world on the basis of tactical driving decisions made by the RL agent.

2. The method of claim 1, further comprising:

   traffic sampling (112), in which state-action pairs encountered by the autonomous vehicle are recorded on the basis of at least one physical sensor signal,
   wherein the uncertainty evaluation relates to the recorded state-action pairs.

3. The method of claim 1 or 2, wherein the first and/or the second environment is a simulated environment.

4. The method of any claim 3, wherein the second environment is generated from the subset of state-action pairs.

5. The method of any of the preceding claims, wherein the additional training includes modifying said plurality of state-action value functions in respective training sessions.

6. The method of any of claims 1 to 4, wherein the additional training includes modifying a combined state-action value function representing a central tendency of said plurality of state-action value functions.

7. The method of any of the preceding claims, wherein the RL agent includes at least one neural network.

8. The method of claim 7, wherein the RL agent is obtained by a policy gradient algorithm, such as an actor-critic algorithm.

9. The method of claim 7, wherein the RL agent is a Q-learning agent, such as a deep Q network, DQN.

10. The method of claim 7 and 9, wherein the training sessions use an equal number of neural networks.

11. The method of any of claims 7 to 10, wherein the initial value corresponds to a randomized prior function, RPF.

12. An arrangement (200) for controlling actuators in an autonomous vehicle (299), comprising:

    processing circuitry (210) and memory (212) implementing a reinforcement learning, RL, agent (220) configured to interact with a simulated or real-world first environment (E1) including the autonomous vehicle in a plurality of training sessions, such that in each training session the environment has a different initial value and each training session yields a state-action value function $Q_k(s, a)$ dependent on state and action, wherein a state describes the surrounding vehicles in a driving environment of the autonomous vehicle; and

a vehicle control interface (214) configured to receive signals from physical sensors in the vehicle, for thereby detecting current conditions of a driving environment of the autonomous vehicle or internal states prevailing in the vehicle, and to control the autonomous vehicle on the basis of tactical driving decisions made by the RL agent, by transmitting wired or wireless signals to the actuators in the vehicle, wherein:

- each said tactical driving decision, such as a lane change or whether to stop or go at an intersection, relates to control of the autonomous vehicle in the real world;
- each said tactical driving decision is based on a common state-action value function $\overline{Q}(s, a)$ obtained by combining the plurality of state-action value functions $Q_k(s, a)$ from the training sessions; and
- the variability measure is one or more of the following: a variance, a range, a deviation, a variation coefficient, an entropy,

the processing circuitry and memory further implementing a training manager (222) configured to:

- estimate an uncertainty including computing a variability measure for values of the plurality of state-action value functions evaluated for one or more state-action pairs corresponding to possible tactical driving decisions by the trained RL agent, including the recorded state-action pairs, and
- initiate additional training, in which the RL agent interacts with a simulated or real-world second environment (E2) including the autonomous vehicle , wherein the second environment differs from the first environment by an increased exposure to a subset of state-action pairs for which the variability measure indicates a variability measure exceeding a threshold $C_v$.

13. The arrangement of claim 12, wherein the vehicle control interface (214) is further configured to record state-action pairs encountered by the autonomous vehicle on the basis of at least one physical sensor in the autonomous vehicle, and wherein the training manager is configured to estimate the uncertainty for the recorded state-action pairs.

14. A computer program comprising instructions to cause the arrangement of claim 12 or 13 to perform the method of any of claims 1 to 11.

**Patentansprüche**

1. Computer-implementiertes Verfahren (100) zur Steuerung von Aktuatoren in einem autonomen Fahrzeug, das Verfahren umfassend:

mehrere Trainingssitzungen (110-1, ..., 110-K), in denen ein Agent für Verstärkungslernen, RL, mit einer simulierten oder realen ersten Umgebung einschließlich des autonomen Fahrzeugs interagiert, so dass in jeder Trainingssitzung die Umgebung einen anderen Anfangswert hat und jede Trainingssitzung eine Zustands-Aktions-Wertfunktion $Q_k(s, a)$ in Abhängigkeit von Zustand und Aktion ergibt, wobei ein Zustand die das autonome Fahrzeug umgebenden Fahrzeuge beschreibt;
eine Unsicherheitsbewertung (114), die das Berechnen eines Variabilitätsmaßes für Werte mehrerer Zustands-Aktions-Wertfunktionen umfasst, die für ein oder mehrere Zustandsaktionspaare bewertet werden, die möglichen taktischen Fahrentscheidungen durch den trainierten RL-Agenten entsprechen, wobei:

- jede dieser taktischen Fahrentscheidungen, wie z. B. ein Spurwechsel oder die Entscheidung, ob an einer Kreuzung angehalten oder weitergefahren werden soll, mit der Steuerung des autonomen Fahrzeugs in der realen Welt zusammenhängt;
- jede taktische Fahrentscheidung auf einer gemeinsamen Zustands-Aktions-Wertfunktion $\overline{Q}(s, a)$ basiert, die durch Kombination der mehreren Zustands-Aktions-Wertfunktionen $Q_k(s, a)$ aus den Trainingssitzungen erhalten wird; und
- das Variabilitätsmaß eines oder mehrere der folgenden ist: eine Varianz, ein Bereich, eine Abweichung, ein Variationskoeffizient, eine Entropie;

zusätzliches Training (116), bei dem der RL-Agent mit einer simulierten oder realen zweiten Umgebung einschließlich des autonomen Fahrzeugs interagiert, wobei sich die zweite Umgebung von der ersten Umgebung durch eine erhöhte Exposition gegenüber einer Untergruppe von Zustandsaktionspaaren unterscheidet, für die das Variabilitätsmaß ein Variabilitätsmaß anzeigt, das einen Schwellenwert $C_v$ überschreitet; und
Fahrzeugsteuerung, bei der das autonome Fahrzeug in der realen Welt auf der Grundlage von taktischen
Fahrentscheidungen des RL-Agenten gesteuert wird.

2. Verfahren nach Anspruch 1, ferner umfassend:

Verkehrsabtastung (112), bei der vom autonomen Fahrzeug angetroffene Zustandsaktionspaare auf der Grundlage mindestens eines physikalischen Sensorsignals erfasst werden,
wobei sich die Unsicherheitsbewertung auf die aufgezeichneten Zustandsaktionspaare bezieht.

3. Verfahren nach Anspruch 1 oder 2, wobei die erste und/oder die zweite Umgebung eine simulierte Umgebung ist.

4. Verfahren nach Anspruch 3, wobei die zweite Umgebung aus der Untergruppe der Zustandsaktionspaare erzeugt wird.

5. Verfahren nach einem der vorhergehenden Ansprüche, wobei das zusätzliche Training das Modifizieren der mehreren Zustands-Aktions-Wertfunktionen in den jeweiligen Trainingssitzungen umfasst.

6. Verfahren nach einem der Ansprüche 1 bis 4, wobei das zusätzliche Training das Modifizieren einer kombinierten Zustands-Aktions-Wertfunktion umfasst, die eine zentrale Tendenz der mehreren Zustands-Aktions-Wertfunktionen darstellt.

7. Verfahren nach einem der vorhergehenden Ansprüche, wobei der RL-Agent mindestens ein neuronales Netz umfasst.

8. Verfahren nach Anspruch 7, wobei der RL-Agent durch einen Policy-Gradienten-Algorithmus, wie z. B. einen Algorithmus mit Akteurkritik, ermittelt wird.

9. Verfahren nach Anspruch 7, wobei der RL-Agent ein Q-Learning-Agent ist, wie z.B. ein Deep Q-Netzwerk, DQN.

10. Verfahren nach Anspruch 7 und 9, wobei in den Trainingssitzungen eine gleiche Anzahl von neuronalen Netzen verwendet wird.

11. Verfahren nach einem der Ansprüche 7 bis 10, wobei der Anfangswert einer randomisierten früheren Funktion (RPF) entspricht.

12. Anordnung (200) zur Steuerung von Aktuatoren in einem autonomen Fahrzeug (299), umfassend:

eine Verarbeitungsschaltung (210) und einen Speicher (212), die einen Agenten (220) für Verstärkungslernen, RL, implementieren, der konfiguriert ist, um mit einer simulierten oder realen ersten Umgebung (E1) einschließlich des autonomen Fahrzeugs in mehreren Trainingssitzungen zu interagieren, so dass in jeder Trainingssitzung die Umgebung einen anderen Anfangswert hat und jede Trainingssitzung eine Zustands-Aktions-Wertfunktion $Q_k(s,a)$ in Abhängigkeit von Zustand und Aktion ergibt, wobei ein Zustand die umgebenden Fahrzeuge in einer Fahrumgebung des autonomen Fahrzeugs beschreibt; und
eine Fahrzeugsteuerungsschnittstelle (214), die konfiguriert ist, um Signale von physikalischen Sensoren im Fahrzeug zu empfangen, um dadurch aktuelle Bedingungen einer Fahrumgebung des autonomen Fahrzeugs oder interne Zustände, die im Fahrzeug vorherrschen, zu erfassen, und das autonome Fahrzeug auf der Grundlage taktischer Fahrentscheidungen des RL-Agenten zu steuern, indem sie verdrahtete oder drahtlose Signale an die Aktuatoren im Fahrzeug überträgt, wobei:

- jede dieser taktischen Fahrentscheidungen, wie z. B. ein Spurwechsel oder die Entscheidung, ob an einer Kreuzung angehalten oder weitergefahren werden soll, mit der Steuerung des autonomen Fahrzeugs in der realen Welt zusammenhängt;
- jede taktische Fahrentscheidung auf einer gemeinsamen Zustands-Aktions-Wertfunktion $\overline{Q}(s, a)$ basiert, die durch Kombination der mehreren Zustands-Aktions-Wertfunktionen $Q_k(s, a)$ aus den Trainingssitzungen erhalten wird; und
- wobei das Variabilitätsmaß eines oder mehrere der folgenden ist: eine Varianz, ein Bereich, eine Abweichung, ein Variationskoeffizient, eine Entropie,

die Verarbeitungsschaltung und der Speicher ferner einen Trainingsmanager (222) implementieren, der konfiguriert ist zum:

- Schätzen einer Unsicherheit, einschließlich des Berechnens eines Variabilitätsmaßes für Werte der mehreren Zustands-Aktions-Wertfunktionen, die für ein oder mehrere Zustandsaktionspaare bewertet werden, die möglichen taktischen Fahrentscheidungen durch den trainierten RL-Agenten entsprechen, einschließlich der aufgezeichneten Zustandsaktionspaare, und
- Initiieren eines zusätzlichen Trainings, bei dem der RL-Agent mit einer simulierten oder realen zweiten Umgebung (E2) einschließlich des autonomen Fahrzeugs interagiert, wobei sich die zweite Umgebung von der ersten Umgebung durch eine erhöhte Exposition gegenüber einer Untergruppe von Zustandsaktionspaaren unterscheidet, für die das Variabilitätsmaß ein Variabilitätsmaß anzeigt, das einen Schwellenwert $C_v$ überschreitet.

13. Anordnung nach Anspruch 12, wobei die Fahrzeugsteuerungsschnittstelle (214) ferner konfiguriert ist, um von dem autonomen Fahrzeug angetroffene Zustandsaktionspaare auf der Grundlage von mindestens einem physikalischen Sensor in dem autonomen Fahrzeug aufzuzeichnen, und wobei der Trainingsmanager konfiguriert ist, um die Unsicherheit für die aufgezeichneten Zustandsaktionspaare zu schätzen.

14. Computerprogramm mit Anweisungen, um die Anordnung nach Anspruch 12 oder 13 zu veranlassen, das Verfahren nach einem der Ansprüche 1 bis 11 durchzuführen.

**Revendications**

1. Procédé informatisé (100) de commande d'actionneurs dans un véhicule autonome, le procédé comprenant :

une pluralité de sessions d'apprentissage (110-1, ..., 110K), dans lesquelles un agent d'apprentissage par renforcement, RL, interagit avec un premier environnement simulé ou réel comprenant le véhicule autonome, de sorte que dans chaque session d'apprentissage l'environnement ait une valeur initiale différente et que chaque session d'apprentissage produise une fonction de valeur d'état-action $Q_k(s,a)$ dépendant de l'état et de l'action, un état décrivant les véhicules entourant le véhicule autonome ;
une évaluation d'incertitude (114) comprenant le calcul d'une mesure de variabilité pour des valeurs de la pluralité de fonctions de valeur d'état-action évaluées pour une ou plusieurs paires état-action correspondant à des décisions de conduite tactiques possibles par l'agent RL formé :

- chacune desdites décisions tactiques de conduite, comme un changement de voie ou s'il faut s'arrêter ou aller à une intersection, concernant la commande du véhicule autonome dans le monde réel ;
- chaque décision tactique de conduite étant basée sur une fonction de valeur d'état-action $\overline{Q}(s,a)$ commune obtenue en combinant la pluralité de fonctions de valeur d'état-action $Q_k(s,a)$ des sessions d'apprentissage ; et
- la mesure de variabilité étant une ou plusieurs des suivantes : une variance, une plage, une déviation, un coefficient de variation, une entropie ;

un apprentissage supplémentaire (116), dans lequel l'agent RL interagit avec un second environnement simulé ou réel comprenant le véhicule autonome, le second environnement différant du premier environnement par une exposition accrue à un sous-ensemble de paires état-action pour lequel la variabilité indique une variabilité dépassant un seuil $C_v$ ; et
la commande du véhicule, le véhicule autonome étant monté dans le monde réel sur la base de décisions tactiques de conduite prises par l'agent RL.

2. Procédé selon la revendication 1, comprenant en outre :

un échantillonnage de trafic (112), dans lequel les paires état-action rencontrées par le véhicule autonome sont enregistrées sur la base d'au moins un signal de capteur physique,
l'évaluation de l'incertitude concernant les paires état-action enregistrées.

3. Procédé selon la revendication 1 ou 2, dans lequel le premier et/ou le second environnement est un environnement simulé.

4. Procédé selon la revendication 3, dans lequel le second environnement est généré à partir du sous-ensemble de paires état-action.

5. Procédé selon l'une quelconque des revendications précédentes, dans lequel l'apprentissage supplémentaire comprend la modification de ladite pluralité de fonctions de valeur d'état-action dans des sessions d'apprentissage correspondantes.

6. Procédé selon l'une quelconque des revendications 1 à 4, dans lequel l'apprentissage supplémentaire comprend la modification d'une fonction combinée de valeur d'état-action représentant une tendance centrale de ladite pluralité de fonctions de valeur d'état-action.

7. Procédé selon l'une quelconque des revendications précédentes, dans lequel l'agent RL comprend au moins un réseau neuronal.

8. Procédé selon la revendication 7, dans lequel l'agent RL est obtenu par un algorithme de gradient de police, tel qu'un algorithme acteur-critique.

9. Procédé selon la revendication 7, dans lequel l'agent RL est un agent d'apprentissage Q, tel qu'un réseau Q profond, DQN.

10. Procédé selon les revendications 7 et 9, dans lequel les sessions d'apprentissage utilisent un nombre égal de réseaux neuronaux.

11. Procédé selon l'une quelconque des revendications 7 à 10, dans lequel la valeur initiale correspond à une fonction antérieure aléatoire, RPF.

12. Dispositif (200) pour commander des actionneurs dans un véhicule autonome (299), comprenant:

   un circuit de traitement (210) et une mémoire (212) mettant en œuvre un agent d'apprentissage à renforcement (220) configuré pour interagir avec un premier environnement simulé ou réel (E1) comprenant le véhicule autonome dans une pluralité de sessions d'apprentissage, de telle sorte que, dans chaque session d'apprentissage, l'environnement présente une valeur initiale différente et que chaque session d'apprentissage produise une fonction de valeur d'état-action $Q_k(s,a)$ dépendant de l'état et de l'action, un état décrivant les véhicules environnants dans un environnement de conduite du véhicule autonome ; et
   une interface de commande de véhicule (214) configurée pour recevoir des signaux de capteurs physiques dans le véhicule, pour détecter ainsi les conditions actuelles d'un environnement de conduite du véhicule autonome ou les états internes prévalant dans le véhicule, et pour commander le véhicule autonome sur la base de décisions tactiques de conduite prises par l'agent RL, en transmettant des signaux câblés ou sans fil aux actionneurs dans le véhicule:

   - chacune desdites décisions tactiques de conduite, comme un changement de voie ou s'il faut s'arrêter ou aller à une intersection, concernant la commande du véhicule autonome dans le monde réel;
   - chaque décision tactique de conduite étant basée sur une fonction de valeur d'état-action commune $\overline{Q}(s,a)$ obtenue en combinant la pluralité de fonctions de valeur d'état-action $Q_k(s,a)$ des sessions d'apprentissage ; et
   - la mesure de variabilité étant une ou plusieurs des suivantes : une variance, plage, une déviation, un coefficient de variation, une entropie,

   le circuit de traitement et la mémoire mettant en œuvre en outre un gestionnaire d'apprentissage (222) configuré pour :

   - estimer une incertitude comprenant le calcul d'une mesure de variabilité pour des valeurs de la pluralité de fonctions de valeur d'état-action évaluées pour une ou plusieurs paires de valeurs d'état-action correspondant à des décisions de conduite tactiques possibles par l'agent RL entraîné, y compris les paires état-action enregistrées, et
   - initier un apprentissage supplémentaire, dans laquelle l'agent RL interagit avec un second environnement simulé ou réel (E2) comprenant le véhicule autonome, le second environnement différant du premier environnement par une exposition accrue à un sous-ensemble de paires état-action pour lequel la mesure de variabilité indique une mesure de variabilité dépassant un seuil $C_v$.

13. Dispositif selon la revendication 12, dans lequel l'interface de commande de véhicule (214) est en outre configurée pour enregistrer des paires état-action rencontrées par le véhicule autonome sur la base d'au moins un capteur physique dans le véhicule autonome, et le gestionnaire d'apprentissage est configuré pour estimer l'incertitude pour les paires état-action enregistrées.

14. Programme informatique comprenant des instructions pour amener le dispositif selon la revendication 12 ou 13 à exécuter le procédé selon l'une quelconque des revendications 1 à 11.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200094824 A1

**Non-patent literature cited in the description**

- **C. J. HOEL** ; **K. WOLFF** ; **L. LAINE**. Automated speed and lane change decision making using deep reinforcement learning. *Proceedings of the 21st International Conference on Intelligent Transportation Systems (ITSC)*, 04 November 2018, 2148-2155
- **LÜTJENS**. *Safe Reinforcement Learning With Model Uncertainty Estimates*, 20 May 2019
- **R. S. SUTTON** ; **A. G. BARTO**. Reinforcement Learning: An Introduction. MIT Press, 2018
- **V. MNIH et al.** Human-level control through deep reinforcement learning. *Nature*, 2015, vol. 518, 529-533
- Randomized prior functions for deep reinforcement learning. **I. OSBAND** ; **J. ASLANIDES** ; **A. CASSIRER et al.** Adv. in Neural Inf. Process. Syst.. 2018, vol. 31, 8617-8629